# EUROPÄISCHE PATENTSCHRIFT

(11) **EP 4 587 304 B1**
(45) Veröffentlichungstag und Bekanntmachung des Hinweises auf die Patenterteilung: **02.09.2026**
(21) Anmeldenummer: 23772111.3
(22) Anmeldetag: 07.09.2023
(51) Int. Cl.: B60T 1/10, B60T 8/1761, B60W 30/18

(54) **VERFAHREN ZUM REGELN FÜR EIN FAHRZEUG, COMPUTERPROGRAMM, COMPUTERLESBARES MEDIUM, STEUERGERÄT UND FAHRZEUG, INSBESONDERE NUTZFAHRZEUG**
METHOD OF CONTROL FOR A VEHICLE, COMPUTER PROGRAM, COMPUTER-READABLE MEDIUM, CONTROLLER AND VEHICLE, IN PARTICULAR COMMERCIAL VEHICLE
PROCÉDÉ DE COMMANDE D'UN VÉHICULE, PROGRAMME INFORMATIQUE, SUPPORT LISIBLE PAR ORDINATEUR, DISPOSITIF DE COMMANDE ET VÉHICULE, EN PARTICULIER VÉHICULE UTILITAIRE

(30) Priorität: 14.09.2022 DE 102022123507
(43) Veröffentlichungstag der Anmeldung: 23.07.2025
(73) Patentinhaber: ZF CV Systems Global GmbH, 3006 Bern (CH)
(72) Erfinder: KATTENBERG, Thomas, 38159 Vechelde (DE); HESEDING, Johannes, 30499 Hannover (DE); MARX, Andreas, 30926 Seelze (DE)
(74) Vertreter: Rabe, Dirk-Heinrich
(86) Internationale Anmeldenummer: PCT/EP2023/074608
(87) Internationale Veröffentlichungsnummer: WO 2024/056521

(56) Entgegenhaltungen:
- DE-A1- 102008 017 480
- DE-A1- 102013 214 806
- DE-A1- 102019 004 390
- DE-C1- 4 443 814
- US-A1- 2007 046 099
- US-A1- 2021 086 623

## Beschreibung

Die Erfindung betrifft ein Verfahren zum Regeln für ein Fahrzeug, insbesondere Nutzfahrzeug, mit einem zur Nutzbremsung eingerichteten elektrischen Antrieb und einer Reibbremsvorrichtung. Die Erfindung betrifft auch ein Computerprogramm und/oder computerlesbares Medium, ein Steuergerät für ein Fahrzeug, insbesondere Nutzfahrzeug, und ein Fahrzeug, insbesondere Nutzfahrzeug.

Die Erfindung betrifft insbesondere den Bereich der Fahrzeuge, insbesondere Nutzfahrzeuge, einschließlich Anhänger, mit einem elektronisch geregelten Bremssystem (electronic brake system, EBS, beziehungsweise trailer electronic brake system, TEBS) und mindestens einer durch einen elektrischen Antrieb (eDrive) über einen Zentralantrieb und/oder einen radindividuellen Antrieb elektrisch antreibbaren Achse, wobei der elektrische Antrieb zur Nutzbremsung eingerichtet ist. Mit anderen Worten kann der elektrische Antrieb als verschleißfreie Dauerbremse betrieben werden und ermöglicht darüber bei einer Verzögerung eine Rückgewinnung von Bremsenergie in Form von elektrischer Energie (Rekuperation).

An einer angetriebenen Achse können während eines Brems- beziehungsweise Verzögerungsvorgangs der elektrische Antrieb zur Bremsung und die Reibbremse jeweils separat oder gemeinsam betrieben werden. Führt ein dadurch erzieltes Bremsmoment zu einem übermäßigen Schlupf bzw. zu einer Radblockierneigung, so ist das aus einem Reibbremsmoment und/oder einem Nutzbremsmoment resultierende Gesamtbremsmoment zur Gewährleistung der Stabilität zu reduzieren.

In Bremssystem gemäß dem Stand der Technik sind für Anti-Blockier-Systeme (ABS) feste Triggerschwellen zur Erkennung der Radblockierniergung hinterlegt. Diese ABS-Triggerschwellen sind derart gewählt, dass sich für die ABS-Regelung mit einem pneumatischen Bremssystem gemäß dem Stand der Technik die gewünschte Performance ergibt.

In Bremssystemen gemäß dem Stand der Technik werden verschiedene Schwellen im Rahmen der ABS-Erkennung und -Regelung verwendet. Diese Schwellen sind fest kodiert und werden im Betrieb in Kombination mit Eingangsdaten an die Fahrsituation adaptiert. Beispielsweise erfolgt ein Verschieben der Schwellen anhand eines erkannten Reibwerts und/oder eine Kurvenkorrektur anhand des Radschlupfs. Die Schwellwerte umfassen einen höchstzulässigen Radschlupf, einen ersten Schwellwert für die Rad-Verzögerung, bei deren Überschreitung eine Radblockierneigung erkannt und der Druck abgebaut wird, einen zweiten Schwellwert für die Rad-Verzögerung, ab der der Druck gehalten wird (die Rad-Verzögerung verringert sich wieder), und einen dritten Schwellwert für die (positive) Radbeschleunigung nahe Null, der die Annäherung an die Referenzgeschwindigkeit anzeigt und die Phase des Druckaufbaus einleitet. In der Wahl der Triggerschwellen ist indirekt die Dynamik der pneumatischen Bremse bzgl. Reaktionszeiten im Druckab- und Aufbau berücksichtigt. Im Regelfall wird bei erkannter Radblockierneigung zeitgleich eine gegebenenfalls vorhandene und aktivierte Dauerbremsen und/oder Nutzbremse abgeworfen bzw. deaktiviert.

Bei aktiver ABS-Regelung wird somit zyklisch Bremsdruck abgebaut, gehalten und wieder aufgebaut, sodass die Radverzögerung bzw. -beschleunigung zwischen den festgelegten Schwellen pendelt. Parallel werden vorhandene Dauerbremsen deaktiviert, bspw. via TSC1-Nachrichten, sodass die ABS-Regelung ausschließlich mit dem pneumatischen Bremssystem beziehungsweise der Reibbremsvorrichtung erfolgt.

Ein elektrischer Antrieb wird in diesem Zusammenhang analog eines konventionellen Retarders behandelt und gemäß dem Stand der Technik bei einer ABS-Regelung abgeworfen. Die Anwendung der fest hinterlegten und konservativ gewählten ABS-Regelschwellen führt dazu, dass der elektrische Antrieb frühzeitig abgeworfen wird. Dadurch wird Rekuperationspontential verschenkt und der elektrische Antrieb kann nicht aktiv zur Ausregelung des Schlupfs und/oder zur Bremsung verwendet werden.

DE 10 2019 135 087 A1 offenbart ein Verfahren zur Schlupfregelung eines über einen elektrischen Antrieb angetriebenen Fahrzeugrades, mit mindestens folgenden Schritten: Ansteuerung des elektrischen Antriebs des Fahrzeugrades mit einem Ist-Antriebsmoment in einer Moment-Steuerung in einem Moment-Steuerungsschritt, Ermittlung einer Raddrehzahl und eines Radschlupfes des Fahrzeugrades und Bewertung des Radschlupfes durch ein Instabilitätskriterium, ob eine Instabilität vorliegt, bei Erkennung einer Instabilität direkter oder indirekter Übergang in eine Schlupfregelung des Radschlupfes auf einen Soll-Schlupf durch Ansteuerung des elektrischen Antriebs, Ermittlung, ob ein Endkriterium zur Beendigung der Schlupfregelung erfüllt ist, falls das Endkriterium erfüllt ist, Rückführung zu der Moment-Steuerung in dem Moment-Steuerungsschritt.

DE 10 2012 217 679 A1 offenbart ein schlupfgeregeltes Bremssystem für ein elektrisch angetriebenes Kraftfahrzeug, das Reibungsbremsen an den Rädern mindestens einer Achse, welche von einer Reibungsbremsensteuereinrichtung angesteuert werden, mindestens eine elektrische Maschine, die mit mindestens einem Rad verbunden ist und von einer Elektroantriebssteuereinrichtung angesteuert wird, Mittel zur Erfassung einer Verzögerungsanforderung, insbesondere ein Bremspedal mit Pedalwinkelsensor, eine Radschlupfregeleinrichtung und eine Momentenverteileinrichtung umfasst. Dabei ist das oder die Mittel zur Erfassung einer Verzögerungsanforderung mit der Radschlupfregeleinrichtung verbunden, welche nach Maßgabe der Verzögerungsanforderung Sollbremsmomente für jedes Rad vorgibt, wobei die Radschlupfregeleinrichtung mit einer Momentenverteileinrichtung verbunden ist, welche mit der Reibungsbremsensteuereinrichtung und der Elektroantriebssteuereinrichtung verbunden ist und nach Maßgabe der Sollbremsmomente Reibungsbremsanforderungen an die Reibungsbremsensteuereinrichtung und Generatorbremsanforderungen an die Elektroantriebssteuereinrichtung vorgibt. Weitere die Fahrdynamik betreffende Informationen wird von einem Zustandsbeobachter an Radschlupfregeleinrichtung übermittelt. Die Elektroantriebssteuereinrichtung sendet das/die aktuell aufgebrachte/n Generatorbremsmoment/e und/oder das/die maximal erzeugbare/n Generatorbremsmoment/e an die Momentenverteileinrichtung und die Aufteilung zwischen Reibungsbremsanforderungen und Generatorbremsanforderung/en erfolgt unter Berücksichtigung des/der aktuell aufgebrachten und/oder maximal erzeugbaren Generatorbremsmoment/e.

### Austauschseite 3a (einzufügen auf Seite 3 nach dem letzten Absatz)

Die DE102008017480A1 betrifft ein Verfahren zum Betrieb einer Fahrzeugbremsanlage sowie eine entsprechende Fahrzeugbremsanlage, insbesondere für Kraftfahrzeuge. Die einer Achse zugeordneten Fahrzeugräder des Kraftfahrzeugs werden zumindest teilweise von einem Elektromotor angetrieben, der während einer Rekuperation von Bremsenergie als Generator betreibbar ist und dabei ein bremsendes Rekuperationsmoment auf die jeweilige Achse ausübt. Zur Vermeidung eines Überbremsens an der Hinterachse wird vorgeschlagen, dass das an der mindestens einen Hinterachse anliegende Rekuperationsmoment derart begrenzt wird, dass der an mindestens einem Fahrzeugrad dieser Hinterachse anliegende Schlupf eine jeweils diesem Fahrzeugrad individuell zugeordnete erste Schlupfschwelle nicht oder nur unwesentlich überschreitet.

Es ist die Aufgabe der Erfindung, den Stand der Technik zu bereichern und eine verbesserte Regelung zur Bremsung eines Fahrzeugs zu ermöglichen. In einer Ausgestaltung der Erfindung kann die Aufgabe sein, dass der elektrische Antrieb effektiv bei der Bremsung des Fahrzeugs mitwirken kann und Möglichkeiten zur Rekuperation besser ausgenutzt werden können.

Die Aufgabe wird durch ein Verfahren nach Anspruch 1 sowie den Gegenständen nach den weiteren unabhängigen Ansprüchen gelöst. Die Unteransprüche geben bevorzugte Weiterbildungen der Erfindung an.

Gemäß der Erfindung wird ein Verfahren zum Regeln für ein Fahrzeug, insbesondere Nutzfahrzeug, mit einem zur Nutzbremsung eingerichteten elektrischen Antrieb und einer Reibbremsvorrichtung bereitgestellt. Dabei weist das Verfahren auf: Erfassen einer Auswahlinformation; Ermitteln einer Triggerschwellenmenge und eines Schlupfregelverfahrens anhand der Auswahlinformation, wobei die Triggerschwellenmenge eine oder mehrere zum Erkennen einer Radblockierneigung definierte Schwellwertbedingungen umfasst; Erkennen der Radblockierneigung anhand der einen oder mehreren Schwellwertbedingungen; und Veranlassen eines Regelns des elektrischen Antriebs und/oder der Reibbremsvorrichtung anhand des Schlupfregelverfahrens und der Triggerschwellenmenge bei erkannter Radblockierneigung.

Das Fahrzeug, insbesondere Nutzfahrzeug, wird im Folgenden als Fahrzeug bezeichnet. Das Fahrzeug umfasst Räder, die durch eine Nutzbremsung mit einem Generatorbremsmoment durch den elektrischen Antrieb bremsbar sind. Die Räder sind alternativ oder zusätzlich durch die Reibbremsvorrichtung mit einem Reibbremsmoment bremsbar. Ein Fahrer und/oder eine automatisierte Fahrfunktion kann dabei eine Bremsanforderung bereitstellen beziehungsweise auslösen, die eine Bremsung des Fahrzeugs, einer Achse des Fahrzeugs und/oder eines der Räder mit einem Soll-Bremsmoment durch den elektrischen Antrieb und/oder die Reibbremsvorrichtung bedingt. Gemäß der Bremsanforderung kann das Generatorbremsmoment, das Reibbremsmoment oder ein Gesamtbremsmoment als Summe des Generatorbremsmoments und des Reibbremsmoments zum Bremsen angefordert werden.

Die Auswahlinformation ist eine Information, die fahrzeugseitig abrufbar und/oder erfassbar ist und zur Auswahl der Triggerschwellenmenge und des Schlupfregelverfahrens verwendet wird. Die Auswahlinformation kann auch anhand von fahrzeugseitig abrufbaren und/oder fahrzeugseitig erfassbaren Daten ermittelt werden. Die Auswahlinformation betrifft beispielsweise einen Zustand der Reibbremsvorrichtung, einen Zustand des elektrischen Antriebs, eine Dynamik einer oder mehrerer Räder, eine Dynamik des Fahrzeugs, einen Fahrzeugzustand, eine Fahrbahneigenschaft, die Bremsanforderung und/oder eine Betätigung des Fahrzeugs, also von der Bremsanforderung verschiedene Anforderungen an das Fahren des Fahrzeugs, die einen Einfluss auf das Bremsen haben, beispielsweise eine Einstellung eines Fahrmodus, ein Ausführen einer Fahrassistenzfunktionen und/oder eine Lenkanforderungen. Anhand der Auswahlinformation wird insbesondere der Schlupfregelalgorithmus gewählt. Somit wird anhand der Auswahlinformation gewählt, ob ein Bremsen mit der Reibbremsvorrichtung, dem elektrischen Antrieb oder einer Kombination aus der Reibbremsvorrichtung und dem elektrischen Antrieb zu erfolgen hat.

Anhand der Auswahlinformation wird die Triggerschwellenmenge und das Schlupfregelverfahren ermittelt beziehungsweise ausgewählt. Damit ist eine vielfältigere Regelung des Schlupfes möglich als im Stand der Technik. Insbesondere ist ein Einbeziehen des elektrischen Antriebs in die Regelung des Schlupfes möglich.

Die Triggerschwellenmenge umfasst eine oder mehrere Schwellwertbedingungen. Die Schwellwertbedingungen betreffen insbesondere eine Dynamik der Räder und/oder des Fahrzeugs und können zum Erkennen der Radblockierneigung und/oder zum Regeln des Schlupfes verwendet werden. Das Schlupfregelverfahren ist ein Schema zum Regeln des Schlupfes. Gemäß dem Schlupfregelverfahren wird ein Bremsmoment reduziert, gehalten und/oder erhöht. Dabei kann eine derartige Regelung des Bremsmoments zeitlich vorbestimmt und/oder abhängig von den Schwellwertbedingungen sein.

Anhand des Schlupfregelverfahrens beziehungsweise des Schlupfregelalgorithmus und der Triggerschwellenmenge erfolgt bei erkannter Radblockierneigung das Veranlassen des Regelns des elektrischen Antriebs und/oder der Reibbremsvorrichtung. Dabei wurde erkannt, dass der elektrische Antrieb eine gegenüber der Reibbremsvorrichtung und Retardern sehr viel höhere Dynamik und Regelgüte aufweist. Daher wird vorgeschlagen, dass bei einer erkannter Radblockierneigung das Schlupfregelverfahren und die Triggerschwellenmenge gemäß der Auswahlinformation verwendet wird, womit ein den elektrischen Antrieb einbeziehendes Schlupfregelverfahren berücksichtigt werden kann.

Mit anderen Worten wird vorgeschlagen, verschiedene Triggerschwellen bzw. Sätze von Triggerschwellen zur Erkennung einer Radblockierneigung zu hinterlegen, zwischen denen im Betrieb in Abhängigkeit verschiedener der Auswahlinformation entsprechender Kriterien umgeschaltet wird. Anhand des Auswahlkriteriums kann ein geeignetes Schlupfregelverfahren ausgewählt und angewendet werden.

Ein Schlupfregelverfahren kann insbesondere eine Bremsung über die Reibbremsvorrichtung gemäß einer ABS-Regelung, eine Bremsung über den elektrischen Antrieb und/oder eine Kombination daraus veranlassen. Eine Bremsung durch eine Kombination von Reibbremsvorrichtung und elektrischen Antrieb ist in den am Anmeldetag der vorliegenden Patentanmeldung noch nicht veröffentlichten Patentanmeldungen DE 10 2022 123 477.0, DE 10 2022 123 478.9, DE 10 2022 123 479.7 beschrieben. Auf diese Weise wird ermöglicht, dass der elektrische Antrieb im Normalfall bei einer Komfortbremsungen und möglicher Rekuperation bei Erreichen der klassischen ABS-Schwellen nicht deaktiviert wird und stattdessen weiterhin zur Rekuperation und aktiven Ausregelung und/oder Begrenzung des Radschlupfs beitragen kann.

Erfindungsgemäß umfasst die Auswahlinformation eine Aktivitätsinformation, wobei die Aktivitätsinformation angibt, ob der zur Nutzbremsung eingerichtete elektrische Antrieb und/oder die Reibbremsvorrichtung betrieben werden. Die Aktivitätsinformation umfasst somit eine Information über einen insbesondere gegenwärtigen Zustand des elektrischen Antriebs und/oder der Reibbremsvorrichtung. Damit kann eine geeignete Reaktion des Gesamtbremssystems auf ein Trigger-Event unter Berücksichtigung eines aktuell aktiven Aktors bzw. aktiver Aktoren erfolgen. Beispielsweise kann das Reibbremssystem zum Regeln bevorzugt werden, wenn das Reibbremssystem bereits zum Bremsen verwendet wird. Alternativ oder zusätzlich kann der elektrische Antrieb zum Regeln des Schlupfes bevorzugt werden, wenn der elektrische Antrieb bereits zum Bremsen verwendet wird. Damit kann ein zu einer aktuellen Fahrsituation passender Regelungsansatz gewählt werden und so eine jeweils geeignete Bremsperformance unter Beibehaltung von Stabilität, Seitenführung und/oder Lenkbarkeit bereitgestellt werden.

Erfindungsgemäß entspricht die Triggerschwellenmenge einer von einer Anti-Blockier-System-Triggerschwellenmenge verschiedenen Triggerschwellenmenge, falls die Aktivitätsinformation angibt, dass der zur Nutzbremsung eingerichtete elektrische Antrieb betrieben wird. Anderenfalls, falls die Aktivitätsinformation angibt, dass der zur Nutzbremsung eingerichtete elektrische Antrieb nicht betrieben wird, kann die Triggerschwellenmenge der Anti-Blockier-System-Triggerschwellenmenge entsprechen. Erfolgt eine Bremsung nur mit dem elektrischen Antrieb und ist die Reibbremsvorrichtung nicht aktiv so können entsprechende für diesen Fall optimierte Regel- und Triggerschwellen verwendet werden. Dadurch wird mit dem elektrischen Antrieb sichergestellt, dass der Radschlupf begrenzt wird und die Fahrstabilität und - performance gewährleistet bleiben. Mit anderen Worten hat ein Überschreiten der klassischen und/oder insbesondere pneumatischen ABS-Regelschwellen bei einer Bremsung durch den elektrischen Antrieb keine Auswirkung, denn das Eingreifen der ABS-Regelung ist nicht vonnöten. Der elektrische Antrieb wird nicht abgeworfen und bleibt bei einer Bremsung gemäß einer für den elektrischen Antrieb definierten Triggerschwellenmenge aktiv.

Vorzugsweise umfasst die Auswahlinformation eine Verfügbarkeitsinformation, wobei die Verfügbarkeitsinformation eine Verfügbarkeit und/oder ein Bremsmoment des zur Nutzbremsung eingerichteten elektrischen Antriebs betrifft. Die Verfügbarkeitsinformation betrifft den elektrischen Antrieb. Dabei gibt die Verfügbarkeitsinformation an, ob und/oder in welchem Umfang der elektrische Antrieb zur Verfügung für eine Bremsung und/oder für eine Änderung eines bereits anliegenden Bremsmoments steht. Die Verfügbarkeitsinformation kann einen binären Wert umfassen, der angibt, ob der elektrische Antrieb verfügbar ist. Alternativ oder zusätzlich kann die Verfügbarkeitsinformation einen numerischen Wert umfassen, der beispielsweise eine Regelreserve angibt, also ein potentiell durch den elektrischen Antrieb gegenwärtig aufbringbares Bremsmoment. Damit kann die Auswahlinformation exakte Information bezüglich des elektrischen Antriebs umfassen und so zu einer geeigneten Auswahl der Triggerschwellenmenge und des Schlupfregelalgorithmus führen.

Vorzugsweise entspricht die Triggerschwellenmenge einer Anti-Blockier-System-Triggerschwellenmenge, falls die Verfügbarkeitsinformation angibt, dass der zur Nutzbremsung eingerichtete elektrische Antrieb nicht verfügbar ist. Ist der elektrische Antrieb zum aktuellen Zeitpunkt nicht für Bremsungen verfügbar und kann kein negatives Drehmoment (Bremsmoment) stellen, beispielsweise wenn ein Ladezustand (State of charge, SOC) einer Energiespeichervorrichtung oberhalb einer definierten Schwelle liegt, eine Momentenreduktion durch Temperatur-Derating angezeigt ist und/oder ein Systemfehler vorliegt, so steht die Reibbremsvorrichtung zur Verfügung und es werden die ABS-Trigger- und Regelschwellen verwendet. Zum Regeln kann eine ABS-Regelung erfolgen.

Vorzugsweise umfasst die Auswahlinformation ein Bremsmoment einer Bremsanforderung. Damit kann die Auswahlinformation abhängig von einem zu der Bremsanforderung korrespondierenden Soll-Bremsmoment sein.

Vorzugsweise umfasst die Auswahlinformation eine Wechselwirkungsinformation, die das Zusammenwirken des zur Nutzbremsung eingerichteten elektrischen Antriebs und der Reibbremsvorrichtung betrifft. Dabei wird die Fähigkeit des elektrischen Antriebs im Zusammenspiel mit der Reibbremsvorrichtung den Bremsschlupf zu regeln einbezogen. Die Wechselwirkungsinformation kann eine Information zu einem Integrations- und/oder Vernetzungsgrad des elektrischen Antriebs und der Reibbremsvorrichtung aufweisen. Beispielsweise kann die Wechselwirkungsinformation eine Menge von Schlupfregelalgorithmen definieren, aus denen anhand weiterer Bestandteile der Auswahlinformation ausgewählt wird.

Vorzugsweise wird die Triggerschwellenmenge unter Berücksichtigung einer Nutzbrems-Triggerschwellenmenge und einer Anti-Blockier-System-Triggerschwellenmenge ermittelt. Damit kann sowohl für die Nutzbremse als auch für die Reibbremsvorrichtung eine entsprechende Triggerschwellenmenge in das Ermitteln der zu verwendenden Triggerschwellenmenge einfließen. Dabei kann die Anti-Blockier-System-Triggerschwellenmenge bei einer Bremsung durch allein die Reibbremsvorrichtung ausgewählt werden. Alternativ oder zusätzlich kann die Nutzbrems-Triggerschwellenmenge bei einer Bremsung durch allein den elektrischen Antrieb ausgewählt werden.

Vorzugsweise umfasst die Triggerschwellenmenge eine oder mehrere mittlere Schwellwertbedingung, wobei die eine oder mehrere mittlere Schwellwertbedingung auf einem gewichteten Mittelwert einer Nutzbrems-Schwellwertbedingung der Nutzbrems-Triggerschwellenmenge und einer Anti-Blockier-System-Schwellwertbedingung der Anti-Blockier-System-Triggerschwellenmenge basiert. Bei vorhandener Vernetzung von elektrischem Antrieb und Reibbremssystem kann bei gleichzeitiger und paralleler Bremsung des elektrischen Antriebs und der Reibbremsvorrichtung der Radschlupf begrenzt und ein Blockieren verhindert werden. Für diesen Fall kann ein weiterer Satz an Triggerschwellen beziehungsweise Schwertbedingungen bestimmt werden. Dabei ist es möglich, anhand der Aufteilung der Bremskräfte an der Antriebsachse auf den elektrischen Antrieb und die Reibbremsvorrichtung eine Umschaltung oder ein Überblenden gemäß dem gewichteten Mittelwert zwischen den Triggerschwellenmengen für eine reine Reibbremsung und für eine reinen Nutzbremsung vorzunehmen.

Vorzugsweise ist die mittlere Schwellwertbedingung dynamisch veränderlich. Damit kann eine Anpassung der Schwellwertbedingung zeitabhängig erfolgen und kann somit gemäß einer sich ändernden Fahrsituation und/oder Bremsanforderung angepasst werden.

Gemäß einem weiteren Aspekt der Erfindung wird ein Computerprogramm bereitgestellt. Das Computerprogramm umfasst Befehle, die bei der Ausführung des Programms bzw. der Befehle durch einen Computer diesen veranlassen, das hier beschriebene Verfahren und/oder die Schritte des hier beschriebenen Verfahrens durchzuführen. Das Computerprogramm kann Befehle umfassen, um als optional und/oder vorteilhaft beschriebene Schritte des Verfahrens durchzuführen, um einen entsprechenden technischen Effekt zu erzielen.

Gemäß einem weiteren Aspekt der Erfindung wird ein computerlesbares Medium bereitgestellt. Das computerlesbare Medium umfasst Befehle, die bei der Ausführung des Programms bzw. der Befehle durch einen Computer diesen veranlassen, das hier beschriebene Verfahren und/oder die Schritte des hier beschriebenen Verfahrens durchzuführen. Das computerlesbare Medium kann Befehle umfassen, um als optional und/oder vorteilhaft beschriebene Schritte des Verfahrens durchzuführen, um einen entsprechenden technischen Effekt zu erzielen.

Gemäß einem weiteren Aspekt der Erfindung wird ein Steuergerät für ein Fahrzeug, insbesondere Nutzfahrzeug, bereitgestellt. Das Steuergerät ist dazu eingerichtet, das hier beschriebene Verfahren durchzuführen. Das Steuergerät kann dazu eingerichtet sein, als optional und/oder vorteilhaft beschriebene Schritte des Verfahrens durchzuführen, um einen entsprechenden technischen Effekt zu erzielen. Das Steuergerät kann beispielsweise ein Steuergerät der Reibbremsvorrichtung sein. Ein solches Steuergerät umfasst geeignete Schnittstellen, um die Auswahlinformation betreffende Daten zu empfangen und/oder abrufen zu können. Alternativ kann das Steuergerät ein Steuergerät des elektrischen Antriebs und/oder ein zentrales Steuergerät sein.

Gemäß einem weiteren Aspekt der Erfindung wird ein Fahrzeug, insbesondere Nutzfahrzeug, bereitgestellt. Das Fahrzeug weist das hier beschriebene Steuergerät auf. Das Fahrzeug und/oder das Steuergerät kann dazu eingerichtet sein, als optional und/oder vorteilhaft beschriebene Schritte des Verfahrens durchzuführen, um einen entsprechenden technischen Effekt zu erzielen.

Weitere Vorteile und Merkmale der Erfindung sowie deren technische Effekte ergeben sich aus den Figuren und der Beschreibung der in den Figuren gezeigten bevorzugten Ausführungsformen. Dabei zeigen
Fig. 1 eine schematische Darstellung einer Übersicht eines Fahrzeugs, insbesondere Nutzfahrzeugs, gemäß einer Ausführungsform der Erfindung; und
Fig. 2 eine schematische Darstellung eines Ablaufschemas eines Verfahrens gemäß einer Ausführungsform der Erfindung.

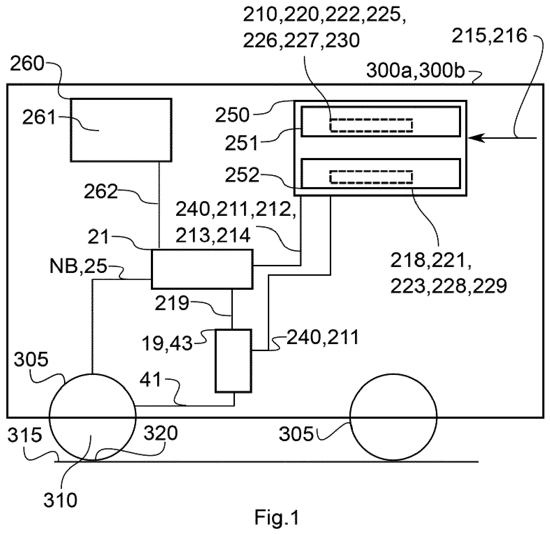

Figur 1 zeigt eine schematische Darstellung einer Übersicht eines Fahrzeugs 300a, insbesondere Nutzfahrzeugs 300b, gemäß einer Ausführungsform der Erfindung.

Das Fahrzeug 300a, insbesondere Nutzfahrzeug 300b, wird im Folgenden als Fahrzeug 300a, 300b bezeichnet. Das Fahrzeug 300a, 300b ist ein Landfahrzeug und beispielsweise ein Lastkraftwagen, ein Bus, ein Anhänger und/oder ein mehrgliedriges Fahrzeug.

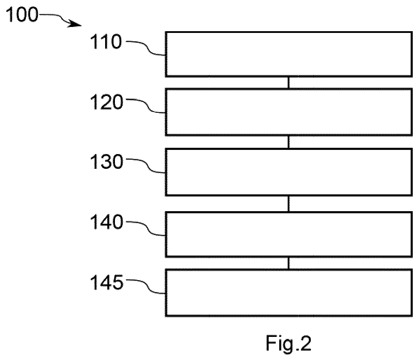

Das Fahrzeug 300a, 300b ist dazu eingerichtet, das mit Bezug zu Figur 2 beschriebene Verfahren 100 durchzuführen. Dafür weist das Fahrzeug 300a, 300b in der in Figur 1 gezeigten Ausführungsform einen elektrischen Antrieb 21, ein Steuergerät 250, eine Reibbremsvorrichtung 19 und eine Energiespeichervorrichtung 260 auf.

Der elektrische Antrieb 21 ist zur Nutzbremsung NB eingerichtet. Dabei kann der elektrische Antrieb 21 ein Generatorbremsmoment 25 erzeugen, das zu einer Verzögerung des Fahrzeugs 300a, 300b führen kann. Der elektrischen Antrieb 21 kann ein Ändern, insbesondere ein Reduzieren und ein Steigern des Generatorbremsmoments 25 bewirken.

Die Reibbremsvorrichtung 19 ist ein elektrisches Bremssystem 43 beziehungsweise ein elektronisch geregeltes Bremssystem und kann ein Reibbremsmoment 41 aufbringen. In einer nicht-gezeigten Ausführungsform ist die Reibbremsvorrichtung 19 ein pneumatisches und/oder hydraulisches Bremssystem.

Der elektrische Antrieb 21 und die Reibbremsvorrichtung 19 sind voneinander separat und/oder gemeinsam betreibbar und regelbar. Damit sind der elektrische Antrieb 21 und die Reibbremsvorrichtung 19 durch ein Zusammenwirken 219 des elektrischen Antriebs 21 und der Reibbremsvorrichtung 19 charakterisiert. Das Zusammenwirken 219 ist durch eine Wechselwirkungsinformation 218 beschrieben. Die Wechselwirkungsinformation 218 umfasst beispielsweise Angaben, ob und wie der elektrische Antrieb 21 und die Reibbremsvorrichtung 19 gemeinsam geregelt werden können.

Das Fahrzeug 300a, 300b gemäß Figur 1 weist mehrere Räder 305 auf. Die Räder 305 sind auf einer Fahrbahn 315 angeordnet. Auf die Räder 305 kann jeweils ein durch die Fahrbahn 315 vermitteltes und durch den elektrischen Antrieb 21 und die Reibbremsvorrichtung 19 bewirktes Gesamtbremsmoment 320 wirken. Das Gesamtbremsmoment 320 ist die Summe aus Generatorbremsmoment 25 und Reibbremsmoment 41. Die Fahrbahn 315 kann insbesondere örtlichen Änderungen unterliegen. Dabei kann die Fahrbahn 315 beispielsweise an verschiedenen Orten voneinander verschiedene Untergründe aufweisen und so zu verschiedenen Reibwerten führen. Das Verzögern des Rades 305 anhand des Gesamtbremsmoments 320 kann dazu führen, dass das Rad 305 dazu neigt zu blockieren. Dem Rad 305 kann somit eine Radblockierneigung 310 zugeordnet werden. Die Radblockierneigung 310 ergibt sich beispielsweise aus einem Schlupf und/oder einer Beschleunigung des Rades 305.

Der elektrische Antrieb 21 kann als sogenannter Zentralantrieb dazu eingerichtet sein, das Generatorbremsmoment 320 auf mehrere Rädern 305 einer Achse (nicht gezeigt) anzuwenden. Der elektrische Antrieb 21 ist in der in Figur 1 gezeigten Ausführungsform dazu eingerichtet, das Generatorbremsmoment 320 radindividuell anzuwenden, wobei Figur 1 nur schematisch die Bremsung eines Rades 305 illustriert.

Die Dynamik eines jeden der Räder 305 ist durch eine messbare Radbeschleunigung beziehungsweise Radverzögerung und/oder eine zeitliche Änderung der Radbeschleunigung charakterisierbar. Die Radverzögerung und/oder die zeitliche Änderung der Radbeschleunigung kann durch Messwerte eines Raddrehzahlsensors (nicht gezeigt) und/oder durch eine Regelinformation 240 des elektrischen Antriebs 21 erfasst werden. Durch das wirkende Gesamtbremsmoment 320 stellt sich ein Schlupf zwischen dem Rad 305 und der Fahrbahn 315 ein. Der Schlupf kann beispielsweise durch Radgeschwindigkeiten ermittelt werden.

Der elektrische Antrieb 21 kann dazu eingerichtet sein, das in der zum Zeitpunkt der Anmeldung noch nicht veröffentlichen deutschen Patentanmeldung 10 2022 114 084.9 vom 03.06.2022 beschriebene Verfahren zur Reibwertschätzung durchzuführen. Dafür kann der elektrische Antrieb dazu eingerichtet sein, ein Beaufschlagen des Rades 305 mit einem zeitlich vorbestimmten Anregungs-Drehmoment durchzuführen, wobei das Beaufschlagen des Rades 305 mit dem Anregungs-Drehmoment periodisch mit einer Frequenz erfolgt; und daraus ein Ermitteln einer Schlupfänderung in Abhängigkeit des Anregungs-Drehmoments durchzuführen, wobei das Ermitteln der Schlupfänderung unter Berücksichtigung der Frequenz erfolgt. Der Reibwert ist eine Fahrbahneigenschaft.

Die Energiespeichervorrichtung 260 ist zum Speichern und Bereitstellen von elektrischer Energie 262 eingerichtet. Dafür ist die Energiespeichervorrichtung 260 mit dem elektrischen Antrieb 21 verbunden. Die Energiespeichervorrichtung 260 weist eine Mehrzahl von Batteriezellen und ein Batteriesteuergerät auf (nicht gezeigt). Die Energiespeichervorrichtung 260 weist einen Ladezustand 261 auf, der durch Nutzbremsung NB erhöht und durch einen Antrieb erniedrigt werden kann.

Das Steuergerät 250 ist dazu eingerichtet, eine Bremsanforderung 216 zum Bremsen des Fahrzeugs 300a, 300b mit einem Bremsmoment 215 zu empfangen und auszuwerten. Die Bremsanforderung 216 kann ein beispielsweise durch eine Pedalbetätigung und/oder eine Betätigung eines Retarder-Hebels durch einen Fahrer des Fahrzeugs 300a, 300b und/oder durch eine automatisierte Fahrfunktion ausgelöstes Signal umfassen, das beispielweise über einen Fahrzeugbus (nicht gezeigt) an das Steuergerät 250 übertragen wird.

Das Steuergerät 250 ist dazu eingerichtet, die Regelinformation 240 von der Reibbremsvorrichtung 19 und/oder dem elektrischen Antrieb 21 zu empfangen. Der Regelinformation 210 kann insbesondere für eine Dynamik des Fahrzeugs 300a, 300b betreffende und/oder ein Rad 305 des Fahrzeugs 300a, 300b betreffende Informationen umfassen. Dafür ist das Steuergerät 250 mit dem elektrischen Antrieb 21 und der Reibbremsvorrichtung 19 verbunden, um die Regelinformationen 240 mit dem elektrischen Antrieb 21 und dem Reibbremsvorrichtung 19 auszutauschen, insbesondere um Messwerte zu empfangen und Regelsignale zu senden. Dabei senden der elektrische Antrieb 21 und die Reibbremsvorrichtung 19 eine jeweilige Aktivitätsinformation 211 an das Steuergerät 250, wobei die Aktivitätsinformation 211 angibt, ob der zur Nutzbremsung NB eingerichtete elektrische Antrieb 21 und/oder die Reibbremsvorrichtung 19 betrieben werden. Der elektrische Antrieb 21 sendet eine Verfügbarkeitsinformation 212 an das Steuergerät 250, wobei die Verfügbarkeitsinformation 212 eine Verfügbarkeit 213 und/oder ein Bremsmoment 214 des zur Nutzbremsung NB eingerichteten elektrischen Antriebs 21 betrifft.

Das Steuergerät 250 ist dazu eingerichtet, eine Auswahlinformation 210 (siehe Beschreibung zu Figur 2) zu empfangen und/oder anhand der empfangenen Regelinformation 240 die Auswahlinformation 210 zu ermitteln. Dazu umfasst das in Figur 1 gezeigte Steuergerät 250 umfasst einen Prozessor 251 und einen Speicher 252, um Informationen zu verarbeiten und zu speichern. Damit ist das Steuergerät 250 dazu eingerichtet, die in Figuren 2 beschriebenen Schritte des Verfahren 100 durchführen. Insbesondere sind in dem Speicher 252 wie in Figur 1 schematisch illustriert die Wechselwirkungsinformation 218, eine Anti-Blockier-System-Triggerschwellenmenge 221, eine Nutzbrems-Triggerschwellenmenge 223, eine oder mehrere Nutzbrems-Schwellwertbedingungen 228 und eine oder mehrere Anti-Blockier-System-Schwellwertbedingung 229 gespeichert. Der Prozessor 251 ist dazu eingerichtet, anhand der im Speicher 252 gespeicherten Daten und der Auswahlinformation 210 zum Regeln 145 des elektrischen Antriebs 21 und/oder der Reibbremsvorrichtung 19 eine Triggerschwellenmenge 220, eine von der Anti-Blockier-System-Triggerschwellenmenge 221 verschiedenen Triggerschwellenmenge 222, eine Schwellwertbedingung 225, eine mittlere Schwellwerbedingung 226 und/oder einen gewichteten Mittelwert 227 zu ermitteln und ein Schlupfregelverfahren 230 auszuwählen (siehe Beschreibung zu Figur 2). Anhand der von dem Steuergerät 250 ermittelten Informationen kann das Steuergerät 250 den ausgewählten Schlupfregelalgorithmus 230 und die dazugehörige Triggerschwellenmenge 220 betreffende Regelinformation 240 zum Regeln 145 des elektrischen Antriebs 21 und der Reibbremsvorrichtung 19 an den elektrischen Antrieb 21 und die Reibbremsvorrichtung 19 übermitteln. Der elektrische Antrieb 19 und/oder die Reibbremsvorrichtung 19 können somit anhand der Regelinformation 240 ein Bremsen des Fahrzeugs 300a, 300b durchführen.

Die Reibbremsvorrichtung 19 umfasst ein Reibbrems-Steuergerät und der elektrische Antrieb 21 umfasst ein Antriebs-Steuergerät (je nicht gezeigt). Das Steuergerät 250 ist mit dem Reibbrems-Steuergerät und dem Antriebs-Steuergerät wie mit Bezug zu der Rreibbremsvorrichtung 19 und dem elektrischen Antrieb 21 beschrieben verbunden. Das Steuergerät 250 ist in der gezeigten Ausführungsform der Reibbremsvorrichtung 19 und dem elektrischen Antrieb 21 ein separates Steuergerät 250 des Fahrzeugs 300a, 300b. Alternativ ist es möglich, das Steuergerät 250 in einer nicht gezeigten-Ausführungsform in das Reibbrems-Steuergerät oder das Antriebs-Steuergerät zu integrieren. Optional wird ein Ermitteln 120 der Triggerschwellenmenge 220 und des Schlupfregelalgorithmus 230 durch das Reibbrems-Steuergerät durchgeführt, da das Reibbres-Steuergerät typischerweise die Fahrstabilitätsregelung betreffende Funktionen durchführt.

Figur 2 zeigt eine schematische Darstellung eines Ablaufschemas eines Verfahrens 100 gemäß einer Ausführungsform der Erfindung. Das Verfahren 100 ist ein Verfahren 100 zum Regeln 145 für ein Fahrzeug 300a, insbesondere Nutzfahrzeug 300b, mit einem zur Nutzbremsung NB eingerichteten elektrischen Antrieb 21 und einer Reibbremsvorrichtung 19. Ein derartiges Fahrzeug 300a, 300b ist in Figur 1 gezeigt. Figur 2 wird unter Bezugnahme auf Figur 1 beschrieben.

Das Verfahren 100 weist ein Erfassen 110 einer Auswahlinformation 210 auf. Dafür wird die Auswahlinformation 210 durch das Steuergerät 250 anhand von von dem Steuergerät 250 empfangenen Informationen ermittelt und/oder in einer nicht-gezeigten Ausführungsform direkt als Regelinformation 240 beispielsweise von dem elektrischen Antrieb 21 und/oder der Reibbremsvorrichtung 19 erfasst. Dazu umfasst die Auswahlinformation 210 die Aktivitätsinformation 211, die Verfügbarkeitsinformation 212, das Bremsmoment 215 der Bremsanforderung 216 und die Wechselwirkungsinformation 218.

Es erfolgt ein Ermitteln 120 der Triggerschwellenmenge 220 und des Schlupfregelverfahrens 230 anhand der Auswahlinformation 210, wobei die Triggerschwellenmenge 220 eine oder mehrere zum Erkennen 130 der Radblockierneigung 310 definierte Schwellwertbedingungen 225 umfasst. Damit wird die ausgewählte Triggerschwellenmenge 220 dazu verwendet, um die Radblockierneigung 310 zu erkennen.

Es erfolgt ein Erkennen 130 der Radblockierneigung 310 anhand der einen oder mehreren Schwellwertbedingungen 225. Dazu werden das Rad 305 betreffende Regelinformation 240 ausgewertet. In Abhängigkeit der Triggerschwellenmenge 220 beziehungsweise der Schwellwertbedingungen 225 ist die Radblockierneigung 310 erkennbar. Beispielsweise kann eine der Schwellwertbedingungen 225 den Schlupf und/oder die Verzögerung des Rades 305 betreffen. Übersteigt der Schlupf und/oder die Verzögerung einen durch die Schwellwertbedingungen 225 definierten Schwellwert, ist die Radblockierneigung 310 erkannt und ein Regeln des Gesamtbremsmoments 320 ist angezeigt. Anderenfalls, ist der Schwellwert unterschritten, liegt keine Radblockierneigung 310 vor und das Regeln 145 kann ausbleiben.

Die Triggerschwellenmenge 220 umfasst weitere Schwellwertbedingungen 226, die zusammen mit der Auswahl des Schlupfregelverfahrens 230 zum Regeln 145 des elektrischen Antriebs 21 und/oder der Reibbremsvorrichtung 19 verwendet werden.

Die Triggerschwellenmenge 220 entspricht einer von einer Anti-Blockier-System-Triggerschwellenmenge 221 verschiedenen Triggerschwellenmenge 222, falls die Aktivitätsinformation 211 angibt, dass der zur Nutzbremsung NB eingerichtete elektrische Antrieb 21 betrieben wird. In diesem Fall, hat eine von dem klassischen ABS verschiedenes Regeln 145 gemäß einem von ABS verschiedenen Schlupfregelverfahren 230 zu erfolgen, um den elektrischen Antrieb 21 weiterhin ein Aufbringen des Generatorbremsmoments 25 zu ermöglichen. Ein derartiges Regeln 145 ist beispielsweise in DE 10 2022 123 477.0, DE 10 2022 123 478.9, DE 10 2022 123 479.7 beschrieben. Für den Fall, dass allein der elektrische Antrieb 21 zum Gesamtbremsmoment 320 beiträgt, erfolgt das Regeln 145 gemäß einer Nutzbrems-Triggerschwellenmenge 223.

Die Triggerschwellenmenge 220 entspricht einer Anti-Blockier-System-Triggerschwellenmenge 221, falls die Verfügbarkeitsinformation 212 angibt, dass der zur Nutzbremsung NB eingerichtete elektrische Antrieb 21 nicht verfügbar ist. In dem Fall steht allein die Reibbremsvorrichtung 19 zur Verfügung. Daher wird die Triggerschwellenmenge 220 gemäß dem klassischen ABS gewählt. In diesem Fall erfolgt das Regeln 145 gemäß der Anti-Blockier-System-Triggerschwellenmenge 221.

Falls der elektrische Antrieb 21 und die Reibbremsvorrichtung 19 zum Gesamtbremsmoment 320 beitragen, wird die Triggerschwellenmenge 220 unter Berücksichtigung einer Nutzbrems-Triggerschwellenmenge 223 und einer Anti-Blockier-System-Triggerschwellenmenge 221 ermittelt. Dabei werden die individuellen Schwellwertbedingung 226 der Triggerschwellenmenge 220 ermittelt. Dazu wird zum Ermitteln der Schwellwertbedingung 226 eine entsprechende Nutzbrems-Schwellwertbedingung 228 der Nutzbrems-Triggerschwellenmenge 223 und einer Anti-Blockier-System-Schwellwertbedingung 229 der Anti-Blockier-System-Triggerschwellenmenge 221 herangezogen. Jede der Nutzbrems-Schwellwertbedingung 228 und der Anti-Blockier-System-Schwellwertbedingung 229 weisen einen numerischen Wert auf, beispielweise einen Grenzwert für einen Schlupf und/oder eine Beschleunigung des Rades 305. Die numerischen Werte werden verwendet, um eine mittlere Schwellwertbedingung 226 gemäß einem gewichteten Mittelwert 227 der Nutzbrems-Schwellwertbedingung 228 und der Anti-Blockier-System-Schwellwertbedingung 229 der Anti-Blockier-System-Triggerschwellenmenge 221 zu berechnen. Durch den gewichteten Mittelwert 227 fließen die Nutzbrems-Schwellwertbedingung 228 und die Anti-Blockier-System-Schwellwertbedingung 229 optional unterschiedlich in die mittlere Schwellwertbedingung 226 ein. Damit kann die Schwellwertbedingung 226 kontinuierlich zwischen der Nutzbrems-Schwellwertbedingung 228 und der Anti-Blockier-System-Schwellwertbedingung 229 überblendet werden. Die mittlere Schwellwertbedingung 226 ist dynamisch veränderlich, also zeitabhängig, falls sich die Auswahlinformation 210 im Laufe der Zeit ändert.

Damit ist es möglich, dass falls an der Antriebsachse derzeit die Reibbremsvorrichtung 19 den größten Teil zur Abbremsung beiträgt, die klassischen pneumatischen ABS-Triggerschwellen verwendet können und der elektrische Antrieb 21 abgeworfen wird, beispielsweise bei einer sehr starken Bremsung oder falls der elektrische Antrieb 21 nur eingeschränkt rekuperieren und bremsen kann. Trägt demgegenüber der elektrische Antrieb 21 den größten Teil zum Gesamtbremsmoment 320 bei, so ist ein Abwerfen des elektrischen Antriebs 21 nicht angezeigt und es wird die Nutzbrems-Triggerschwellenmenge 223 für reines Bremsen durch den elektrischen Antrieb 21 verwendet.

Es erfolgt ein Veranlassen 140 eines Regelns 145 des elektrischen Antriebs 21 und/oder der Reibbremsvorrichtung 19 anhand des Schlupfregelverfahrens 230 und der Triggerschwellenmenge 220 bei erkannter Radblockierneigung 310. Dazu kann das Steuergerät 250 eine entsprechende Regelinformation 240 an den elektrischen Antrieb 21 und/oder die Reibbremsvorrichtung 19 ausgeben, wobei das Regeln 145 beziehungsweise Ändern des Bremsmoments gemäß der Regelinformation 240 durch den elektrischen Antriebs 21 und/oder die Reibbremsvorrichtung 19 erfolgt.

### Bezugszeichen (Teil der Beschreibung):

- 19: Reibbremsvorrichtung
- 21: elektrischer Antrieb
- 25: Generatorbremsmoment
- 41: Reibbremsmoment
- 43: elektrisches Bremssystem

- 100: Verfahren
- 110: Erfassen
- 120: Ermitteln
- 130: Erkennen
- 140: Veranlassen
- 145: Regeln

- 210: Auswahlinformation
- 211: Aktivitätsinformation
- 212: Verfügbarkeitsinformation
- 213: Verfügbarkeit
- 214: Bremsmoment des elektrischen Antriebs
- 215: Bremsmoment einer Bremsanforderung
- 216: Bremsanforderung
- 218: Wechselwirkungsinformation
- 219: Zusammenwirken
- 220: Triggerschwellenmenge
- 221: Anti-Blockier-System-Triggerschwellenmenge
- 222: Triggerschwellenmenge
- 223: Nutzbrems-Triggerschwellenmenge
- 225: Schwellwertbedingung
- 226: mittlere Schwellwertbedingung
- 227: gewichteter Mittelwert
- 228: Nutzbrems-Schwellwertbedingung
- 229: Anti-Blockier-System-Schwellwertbedingung
- 230: Schlupfregelverfahren
- 240: Regelinformation

- 250: Steuergerät
- 251: Prozessor
- 252: Speicher

- 260: Energiespeichervorrichtung
- 261: Ladezustand
- 262: elektrische Energie

- 300a: Fahrzeug
- 300b: Nutzfahrzeug
- 305: Rad
- 310: Radblockierneigung
- 315: Fahrbahn
- 320: Gesamtbremsmoment

- NB: Nutzbremsung

## Patentansprüche

1. Verfahren (100) zum Regeln (145) für ein Fahrzeug (300a), insbesondere Nutzfahrzeug (300b), mit einem zur Nutzbremsung (NB) eingerichteten elektrischen Antrieb (21) und einer Reibbremsvorrichtung (19), wobei das Verfahren (100) aufweist:
- Erfassen (110) einer Auswahlinformation (210), wobei die Auswahlinformation (210) eine Aktivitätsinformation (211) umfasst, wobei die Aktivitätsinformation (211) angibt, ob der zur Nutzbremsung (NB) eingerichtete elektrische Antrieb (21) und/oder die Reibbremsvorrichtung (19) betrieben werden;
- Ermitteln (120) einer Triggerschwellenmenge (220) und eines Schlupfregelverfahrens (230) anhand der Auswahlinformation (210), wobei die Triggerschwellenmenge (220) eine oder mehrere zum Erkennen (130) einer Radblockierneigung (310) definierte Schwellwertbedingungen (225) umfasst, wobei die Triggerschwellenmenge (220) einer von einer Anti-Blockier-System-Triggerschwellenmenge (221) verschiedenen Triggerschwellenmenge (222) entspricht, falls die Aktivitätsinformation (211) angibt, dass der zur Nutzbremsung (NB) eingerichtete elektrische Antrieb (21) betrieben wird;
- Erkennen (130) der Radblockierneigung (310) anhand der einen oder mehreren Schwellwertbedingungen (225); und
- Veranlassen (140) eines Regelns (145) des elektrischen Antriebs (21) und/oder der Reibbremsvorrichtung (19) anhand des Schlupfregelverfahrens (230) und der Triggerschwellenmenge (220) bei erkannter Radblockierneigung (310).

2. Verfahren nach Anspruch 1, wobei die Auswahlinformation (210) eine Verfügbarkeitsinformation (212) umfasst, wobei die Verfügbarkeitsinformation (212) eine Verfügbarkeit (213) und/oder ein Bremsmoment (214) des zur Nutzbremsung (NB) eingerichteten elektrischen Antriebs (21) betrifft.

3. Verfahren nach Anspruch 2, wobei die Triggerschwellenmenge (220) einer Anti-Blockier-System-Triggerschwellenmenge (221) entspricht, falls die Verfügbarkeitsinformation (212) angibt, dass der zur Nutzbremsung (NB) eingerichtete elektrische Antrieb (21) nicht verfügbar ist.

4. Verfahren nach einem der vorherigen Ansprüche, wobei die Auswahlinformation (210) ein Bremsmoment (215) einer Bremsanforderung (216) umfasst.

5. Verfahren nach einem der vorherigen Ansprüche, wobei die Auswahlinformation (210) eine Wechselwirkungsinformation (218) umfasst, die das Zusammenwirken (219) des zur Nutzbremsung (NB) eingerichteten elektrischen Antriebs (21) und der Reibbremsvorrichtung (19) betrifft.

6. Verfahren nach Anspruch 5, wobei die Triggerschwellenmenge (220) unter Berücksichtigung einer Nutzbrems-Triggerschwellenmenge (223) und einer Anti-Blockier-System-Triggerschwellenmenge (221) ermittelt wird.

7. Verfahren nach Anspruch 6, wobei die Triggerschwellenmenge (220) eine oder mehrere mittlere Schwellwertbedingung (226) umfasst, wobei die eine oder mehrere mittlere Schwellwertbedingung (226) auf einem gewichteten Mittelwert (227) einer Nutzbrems-Schwellwertbedingung (228) der Nutzbrems-Triggerschwellenmenge (223) und einer Anti-Blockier-System-Schwellwertbedingung (229) der Anti-Blockier-System-Triggerschwellenmenge (221) basiert.

8. Verfahren nach Anspruch 7, wobei die mittlere Schwellwertbedingung (226) dynamisch veränderlich ist.

9. Computerprogramm, umfassend Befehle, die bei der Ausführung des Programms bzw. der Befehle durch einen Computer diesen veranlassen, das Verfahren (100) und/oder die Schritte des Verfahrens (100) nach einem der Ansprüche 1 bis 8 durchzuführen.

10. Computerlesbares Medium, umfassend Befehle, die bei der Ausführung des Programms bzw. der Befehle durch einen Computer diesen veranlassen, das Verfahren (100) und/oder die Schritte des Verfahrens (100) nach einem der Ansprüche 1 bis 8 durchzuführen.

11. Steuergerät (250) für ein Fahrzeug (300a), insbesondere Nutzfahrzeug (300b), wobei das Steuergerät (250) dazu eingerichtet ist, das Verfahren (100) nach einem der Ansprüche 1 bis 8 durchzuführen.

12. Fahrzeug (300a), insbesondere Nutzfahrzeug (300b), umfassend das Steuergerät (250) nach Anspruch 11.

## Claims

1. Method (100) for controlling (145) for a vehicle (300a), in particular a commercial vehicle (300b), having an electric drive (21) configured for regenerative braking (NB) and a friction brake device (19), wherein the method (100) comprises:
- acquiring (110) selection information (210), wherein the selection information (210) comprises activity information (211), wherein the activity information (211) indicates whether the electric drive (21) configured for regenerative braking (NB) and/or the friction brake device (19) are being operated;
- determining (120) a trigger threshold set (220) and a slip control method (230) on the basis of the selection information (210), wherein the trigger threshold set (220) comprises one or more threshold conditions (225) defined for detecting (130) a wheel locking tendency (310), wherein the trigger threshold set (220) corresponds to a trigger threshold set (222) different from an anti-lock braking system trigger threshold set (221) if the activity information (211) indicates that the electric drive (21) configured for regenerative braking (NB) is being operated;
- detecting (130) the wheel locking tendency (310) on the basis of one or more threshold conditions (225); and
- prompting (140) control (145) of the electric drive (21) and/or the friction brake device (19) on the basis of the slip control method (230) and the trigger threshold set (220) when wheel locking tendency (310) is detected.

2. Method according to claim 1, wherein the selection information (210) comprises availability information (212), wherein the availability information (212) relates to an availability (213) and/or a braking torque (214) of the electric drive (21) configured for regenerative braking (NB).

3. Method according to claim 2, wherein the trigger threshold set (220) corresponds to an anti-lock braking system trigger threshold set (221) if the availability information (212) indicates that the electric drive (21) configured for regenerative braking (NB) is not available.

4. Method according to any of the preceding claims, wherein the selection information (210) comprises a braking torque (215) of a braking request (216).

5. Method according to any of the preceding claims, wherein the selection information (210) comprises interaction information (218) relating to the interaction (219) of the electric drive (21) configured for regenerative braking (NB) and the friction brake device (19).

6. Method according to claim 5, wherein the trigger threshold set (220) is determined taking into account a regenerative braking trigger threshold set (223) and an anti-lock braking system trigger threshold set (221).

7. Method according to claim 6, wherein the trigger threshold set (220) comprises one or more mean threshold conditions (226), wherein the one or more mean threshold condition (226) is based on a weighted mean value (227) of a regenerative braking threshold condition (228) of the regenerative braking trigger threshold set (223) and an anti-lock braking system threshold condition (229) of the anti-lock braking system trigger threshold set (221).

8. Method according to claim 7, wherein the mean threshold condition (226) is dynamically variable.

9. Computer program comprising commands which, when the program or commands are executed by a computer, prompt the computer to carry out the method (100) and/or the steps of the method (100) according to any of claims 1 to 8.

10. Computer-readable medium comprising commands which, when the program or commands are executed by a computer, prompt the computer to carry out the method (100) and/or the steps of the method (100) according to any of claims 1 to 8.

11. Control unit (250) for a vehicle (300a), in particular a commercial vehicle (300b), wherein the control unit (250) is configured to carry out the method (100) according to any of claims 1 to 8.

12. Vehicle (300a), in particular a commercial vehicle (300b), comprising the control unit (250) according to claim 11.

## Revendications

1. Procédé (100) permettant la régulation (145) pour un véhicule (300a), en particulier un véhicule utilitaire (300b), comportant un entraînement électrique (21) conçu pour le freinage régénératif (NB) et un dispositif de freinage à friction (19), dans lequel le procédé (100) présente :
- la détection (110) d'informations de sélection (210), dans lequel les informations de sélection (210) comprennent des informations d'activité (211), dans lequel les informations d'activité (211) indiquent si l'entraînement électrique (21) conçu pour le freinage régénératif (NB) et/ou le dispositif de freinage à friction (19) fonctionnent ;
- la détermination (120) d'une quantité de seuils de déclenchement (220) et d'un procédé de régulation du patinage (230) à partir des informations de sélection (210), dans lequel la quantité de seuils de déclenchement (220) comprend une ou plusieurs conditions de valeur seuil (225) définies pour la reconnaissance (130) d'une tendance au blocage des roues (310), dans lequel la quantité de seuils de déclenchement (220) correspond à une quantité de seuils de déclenchement (222) distincte d'une quantité de seuils de déclenchement du système antiblocage (221), si les informations d'activité (211) indiquent que l'entraînement électrique (21) conçu pour le freinage régénératif (NB) fonctionne ;
- la reconnaissance (130) de la tendance au blocage des roues (310) sur la base de la ou des conditions de valeur seuil (225) ; et
- l'initiation (140) d'une régulation (145) de l'entraînement électrique (21) et/ou du dispositif de freinage à friction (19) à l'aide du procédé de régulation du patinage (230) et de la quantité de seuils de déclenchement (220) lors de la reconnaissance d'une tendance au blocage des roues (310).

2. Procédé selon la revendication 1, dans lequel les informations de sélection (210) comprennent des informations de disponibilité (212), dans lequel les informations de disponibilité (212) concernent une disponibilité (213) et/ou un couple de freinage (214) de l'entraînement électrique (21) conçu pour le freinage régénératif (NB).

3. Procédé selon la revendication 2, dans lequel la quantité de seuils de déclenchement (220) correspond à une quantité de seuils de déclenchement du système antiblocage (221), si les informations de disponibilité (212) indiquent que l'entraînement électrique (21) conçu pour le freinage régénératif (NB) n'est pas disponible.

4. Procédé selon l'une des revendications précédentes, dans lequel les informations de sélection (210) comprennent un couple de freinage (215) d'une demande de freinage (216).

5. Procédé selon l'une des revendications précédentes, dans lequel les informations de sélection (210) comprennent des informations d'interaction (218) concernant l'interaction (219) de l'entraînement électrique (21) conçu pour le freinage régénératif (NB) et du dispositif de freinage à friction (19).

6. Procédé selon la revendication 5, dans lequel la quantité de seuils de déclenchement (220) est déterminée en tenant compte d'une quantité de seuils de déclenchement du freinage régénératif (223) et d'une quantité de seuils de déclenchement du système antiblocage (221).

7. Procédé selon la revendication 6, dans lequel la quantité de seuils de déclenchement (220) comprend une ou plusieurs conditions de valeur seuil moyennes (226), dans lequel la ou les conditions de valeur seuil moyennes (226) sont basées sur une moyenne pondérée (227) d'une condition de valeur seuil du freinage régénératif (228) de la quantité de seuils de déclenchement du freinage de récupération (223) et d'une condition de valeur seuil du système antiblocage (229) de la quantité de seuils de déclenchement du système antiblocage (221).

8. Procédé selon la revendication 7, dans lequel la condition de valeur seuil moyenne (226) est variable de manière dynamique.

9. Programme informatique, comprenant des instructions qui, lors de l'exécution du programme ou des instructions par un ordinateur, amènent ce dernier à mettre en œuvre le procédé (100) et/ou les étapes du procédé (100) selon l'une des revendications 1 à 8.

10. Support lisible par ordinateur, comprenant des instructions qui, lors de l'exécution du programme ou des instructions par un ordinateur, amènent ce dernier à mettre en œuvre le procédé (100) et/ou les étapes du procédé (100) selon l'une des revendications 1 à 8.

11. Appareil de commande (250) pour un véhicule (300a), en particulier un véhicule utilitaire (200b), dans lequel l'appareil de commande (250) est configuré pour mettre en œuvre le procédé (100) selon l'une des revendications 1 à 8.

12. Véhicule (300a), en particulier véhicule utilitaire (300b), comprenant l'appareil de commande (250) selon la revendication 11.
